Europäisches Patentamt

European Patent Office

Office européen des brevets

(19)

(11) Veröffentlichungsnummer: **0 005 694**
A2

(12) **EUROPÄISCHE PATENTANMELDUNG**

(21) Anmeldenummer: 79930007.4

(22) Anmeldetag: 21.05.79

(51) Int. Cl.²: **H 02 H 3/34**
H 01 H 83/14, H 01 F 40/12

(30) Priorität: 22.05.78 LU 79681

(43) Veröffentlichungstag der Anmeldung:
28.11.79 Patentblatt 79/24

(84) Benannte Vertragsstaaten:
BE IT NL

(71) Anmelder: Gath, Nicolas
15, rue Joseph Tockert
L-Luxembourg Hollerich(LU)

(72) Erfinder: Gath, Nicolas
15, rue Joseph Tockert
L-Luxembourg Hollerich(LU)

(54) Fehlerstromschutzschalter.

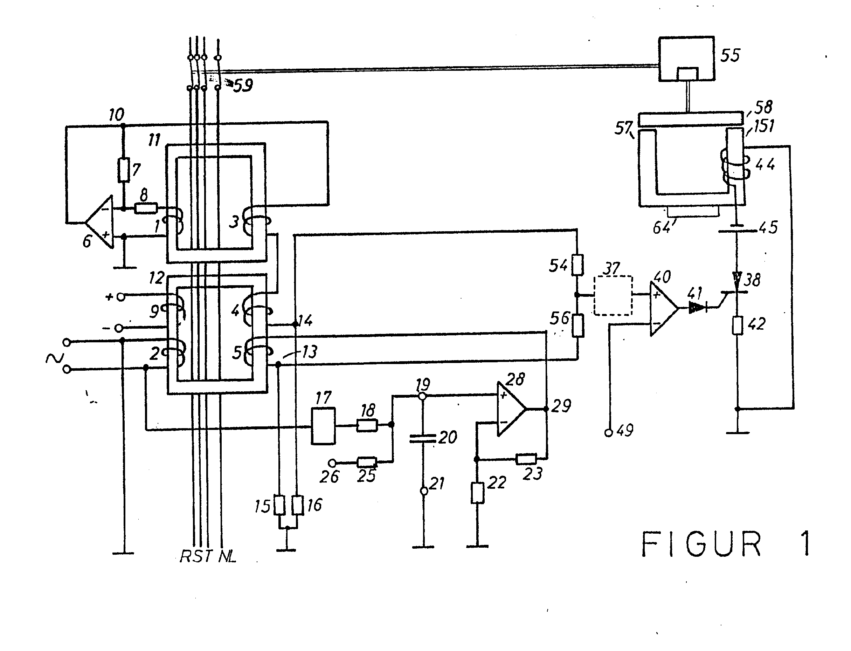

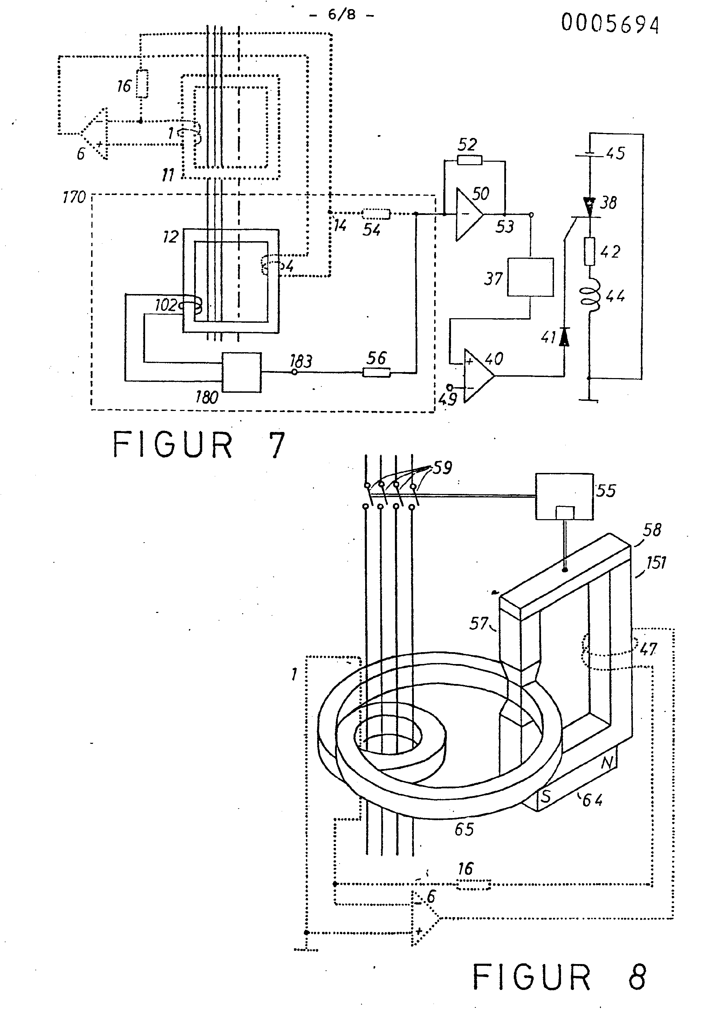

(57) Ein Fehlerstromschutzschalter, der auch gleichstromempfindlich ist, arbeitet weniger gut, wenn starker Wechselstrom-Fehlerstrom auftritt. Gemäss der Erfindung wird in einem Kern 12 durch eine geeignete Schaltung, die in Figur 7 punktiert gezeichnet ist, die von einem Wechselstromanteil des Fehlerstromes bewirkte Durchflutung kompensiert, indem ein entsprechender Strom über eine Spule 1 in den Figuren 1 und 7 dieses Kernes geleitet wird. Dieser Kompensationsstrom ist ein Mass für den Wechselstromanteil. Der Kern in dem ein störender, sich ändernder magnetischer Fluss nicht auftritt, wird zur Feststellung des Gleichstromanteiles benutzt. Die so festgestellten Anteile des Gleichstrom-Fehlerstromes und des Wechselstrom-Fehlerstromes werden an eine geeignete Auswerteschaltung weitergeleitet, die eine Abschaltung hervorruft, wenn die aufgetretenen Werte nicht zulässig sind.

FIGURE 2

EP 0 005 694 A2

Luxemburg, den 21. Mai 1979.

Erfinder und Anmelder : Nicolas GATH

commerçant en machines et outillage

15, rue Joseph Tockert

Luxembourg

Téléphone : 44 34 61

Fehlerstromschutzschalter

Die Erfindung betrifft einen Fehlerstromschutzschalter dessen betriebsstromführende Leiter als Spule über den Kern eines Summenstromwandlers geführt sind, und zwar einen Fehlerstromschutzschalter, welcher im Fall eines Fehlers alle betriebsstromführenden Leiter unterbricht, welche zur Energieversorgung des zu schützenden Teiles der Verbraucheranlage benützt werden, also auch den Nulleiter oder Mittelleiter. Er betrifft aber auch einen Fehlerstromschutzschalter, bei dem eine Unterbrechung nur in einem Leiter erfolgt, der in normalem Betriebszustand Spannung gegen Erde führt. Letzteres trifft zum Beispiel für kombinierte Fehlerstrom- und Leitungsschutzschalter zu, welche einen kleineren Teil der Verbraucheranlage überwachen, der nur über einen Phasenleiter und den Nulleiter versorgt wird. Solche Schutzschalter können anstelle der einfachen Sicherungsautomaten verwendet werden, die ihrerseits heute oft an die Stelle der früher ausschliesslich benutzten Schmelzsicherungen getreten sind. Die Erfindung betrifft auch Fehlerstromschutzschalter, welche mit einer Steckdose kombiniert eine Baueinheit bilden, und die man als Steckdosen-Fehlerstromschutzschalter bezeichnen kann.

Anwendungsgebiet

Solche Schalter können in Wechselstrom- oder Gleichstromnetzen verwendet werden, die ortsfest oder auf Fahrzeugen installiert sind.

Zweck

Sie dienen zum Schutz vor elektrischen Unfällen und Bränden.

## Stand der Technik

Bei den bisher allgemein üblichen Fehlerstromschutzschaltern werden die betriebsstromführenden Leiter als Spulen über den Kern eines Summenstromwandlers geführt. Die Sekundärspule dieses Wandlers ist mit der Spule eines Auslösers verbunden. Normalerweise wird der Anker des Auslösers durch die Anziehungskraft eines Permanentmagnetes festgehalten. Wenn ein Fehlerstrom fliesst, der nur aus Wechselstrom besteht, so erzeugt dieser in der Sekundärspule eine Spannung die über die Spule des Auslösers einen Wechselstrom hervorruft. Dieser Strom hebt die Anziehungskraft des Permanentmagnetes auf den Auslöser auf, wenn er im Verlauf seiner wechselnden Richtung gerade den richtigen Wert durchläuft. Der Anker wird dann leicht von einer Zugfeder abgezogen und gibt die Abschaltung des Schutzschalters frei.

Wenn der Fehlerstrom ganz oder teilweise aus Gleichstrom besteht, so ist die Empfindlichkeit eines solchen Schalters stark herabgesetzt oder ganz aufgehoben. Es sind zwar schon eine ganze Reihe von Patentanmeldungen bekannt worden, welche die Gleichstromsensibilisierung eines Fehlerstromschutzschalters zum Ziel haben, und bei welchen eine Schaltung benutzt wird, die eine Grösse $Kr_{Ab}$ als Abschaltkriterium verwendet, welche eine Funktion der Permeabilität des Summenstromwandlerkerns ist, die ihrerseits wieder eine Funktion der vom Fehlerstrom $i_F$ bewirkten Vormagnetisierung $\phi_{iF}$ ist, so dass diese Schalter sowohl auf Gleichstrom- wie auf Wechselstromfehlerstrom reagieren. Zur Erzeugung der Grösse $Kr_{Ab}$ wird im Summenstromwandlerkern ein magnetischer Wechselfluss $\phi_V$ hervorgerufen, indem ein Wechselstrom über eine Spule des Kernes eines Summenstromwandlers geleitet wird. Anscheinend ist aber bei allen bisher bekannt gewordenen, vorgeschlagenen Verbesserungen die Abschaltkriteriumgrösse $Kr_{Ab}$, die beispielsweise eine Amplitude einer Spannung oder eines Stromes, oder eine Frequenz oder ein Zeitintervall sein kann, auch von der Vormagnetisierungsänderungsgeschwindigkeit $\frac{d\phi_{iF}}{dt}$ abhängig, und es kann zu Störungen im Abschaltverhalten des Schutzschalters kommen wie Fehlabschaltungen und Ausbleiben einer an sich notwendigen Abschaltung. Dies soll durch ein Beispiel erläutert werden. Man nehme an,ein solcher Fehlerstromschutzschalter sei so gebaut, dass er bei einem Gleichstromfehlerstrom von 25 m A gerade abschaltet. Fliesst nun ein Fehlergleichstrom von etwa 23 m A, so soll keine Abschaltung eintreten. Verringert sich nun der Gleichstromfehlerstrom mit sehr grosser Geschwindigkeit, so entsteht in einer Sekundärspule,die sich auf dem Summenstromwandlerkern befindet,eine hohe Spannungsspitze. In den Fehlerstromschutzschaltern,die zur Erreichung der Gleichstromempfindlichkeit vorgeschlagen wurden, wird der induktive Widerstand einer auf dem Kern angeordneten Spule und so auch die Kernpermeabilität geprüft, indem die an der Spule auftretende Selbstinduktionsspannung eines Stromes,von erhöhter Frequenz etwa 1ooo-2ooo Hertz festgestellt wird. In dem angenommenen Beispiel wird die Selbstinduktionsspannung von der Spannungsspitze überlagert, die infolge der schnellen Fehlerstromverringerung entstanden ist. Die eine oder andere der beiden Halbwellen der Selbstinduktionsspannung nimmt jetzt einen Scheitelwert an, der höher ist als der für die Abschaltung massgebene Grenzwert, und es kommt zu einer Abschaltung. Diese ist aber völlig ungerechtfertigt, weil der Fehlerstrom abgenommen, nicht zugenommen hat. Der störende Einfluss von $\frac{d\phi_{iF}}{dt}$ wird umso kleiner ,je kleiner $\frac{d\phi_{iF}}{dt}$ im Verhältnis zu $\frac{d\phi_{v}}{dt}$ ist. Zur Verringerung dieses Störeinflusses gibt es daher zwei Möglichkeiten:

Man kann $\frac{d\phi_{iF}}{dt}$ sehr klein, praktisch zu null machen, oder man kann $\frac{d\phi_{v}}{dt}$ sehr gross machen, indem man die Frequenz und damit die Amplitude von $\phi_v$ möglichst gross wählt. Bisher hat man nur die zweite Möglichkeit empfohlen. Nachteilig ist hierbei, dass ein aus ferromagnetischem Material bestehender Kern sich dann erwärmt, weil dieses Material auch elektrisch leitend ist, und sich starke Wirbelströme einstellen. Ein Ferritkern dagegen überträgt bei normaler Dimensionierung eine geringere Leistung, die nicht mehr ausreicht, um eine in manchen Ländern bestehende Vorschrift zu erfüllen, die besagt, dass bei Ausfall der Netzenergieversorgung infolge Unterbrechung des Nulleiters ein Fehlerstrom, der vom Phasenleiter über einen Menschen zur Erde fliesst, eine Abschaltung hervorrufen muss. Ausserdem ist damit zu rechnen, dass sich geringfügige Unsymetrien der auf dem Summenstromwandlerkern angeordneten Spulen bei Ferritkernen störend auswirken. Infolge der geringeren magnetischen Leitfähigkeit ist der Anteil des magnetischen Flusses, der aus dem Kern als Streufeld in die Umgebung austritt, nicht mehr so vernachlässigbar gering wie bei Kernen aus ferromagnetischen Legierungen. So kann es vorkommen, dass die Sekundärspule des Summenstromwandlers mit dem Streufluss der Spule eines der betriebsstromführenden Leiter verkettet ist, und dass in ihr eine Spannung induziert wird, die eine Abschaltung hervorruft, obwohl kein Fehlerstrom fliesst. Nachteilig ist ausserdem, dass der wechselnde magnetische Fluss $\phi_V$, der zum Zweck der Kontrolle auf Gleichstromvormagnetisierung erzeugt wird, in den betriebsstromführenden Leitern eine Wechselspannung erzeugt, welche auf einen benachbarten, parallel oder in Serie geschalteten Fehlerstromschutzschalter gleicher Bauart störend einwirken kann.

Aufgabe

Der Erfindung liegt folgende Aufgabe zugrunde : In demjenigen Teil der Schaltung, in welchem zwecks Messung des Gleichstromanteiles des Fehlerstromes eines der für die Gleichstromsensibilisierung vorgeschlagenen Verfahren angewendet wird, soll die Aenderungsgeschwindigkeit der vom Fehlerstrom bewirkten Vormagnetisierung so nahe wie möglich bis an den Wert null herabgemindert werden, was bedeutet, dass hier fast nur der Gleichstrom-Fehlerstrom gemessen wird. Zur Messung des Wechselstromanteiles $i_{FW}$ ist daher ein zusätzliches Mittel erforderlich. Beide Stromanteile sollen alsdann addiert werden.

Lösung

Für diese Aufgabeneinstellung gibt es folgende Lösung:

Die betriebsstromführenden Leiter sind in bekannter Weise durch zwei Summenstromwandlerkerne durchgeführt. Der Wechselstromanteil $i_{FW}$ des Fehlerstromes wird in einem Kern $K_{iFW}$ gemessen, und die Durchflutung $\phi_{iFW}$, die dieser Stromanteil in diesem Kern $K_{iFRe}$ hervorruft, wird durch eine Gegendurchflutung kompensiert. Auch in dem zweiten Kern wird die vom Wechselstromanteil $i_{FW}$ erzeugte Durchflutung kompensiert. Was in beiden Kernen an Durchflutung übrigbleibt, wird mit $\Theta_{iFRe}$ bezeichnet. Diese Durchflutung $\Theta_{iFRe}$ wird von einem Teil $i_{FRe}$ des Gesamtfehlerstromes $i_F$ hervorgerufen, der den Gleichstromanteil $i_{FGI}$ des Fehlerstromes enthält, der ja nicht mitgemessen, und dessen Durchflutung daher nicht kompensiert wurde. Der Strom $i_{FRe}$ soll durch eine Schaltung $S_{FRe}$ unter Benutzung des zweiten Kernes $K_{iFRe}$ gemessen werden. Da in diesem die Wechselstromdurchflutung $\Theta_{iFW}$ kompensiert wurde, so ist auch $\frac{d\Theta_{iFW}}{dt}$ nahezu null und macht sich nicht störend auf das Messergebnis für $i_{FRe}$ bemerkbar. Unter gewissen Bedingungen ist es auch möglich für die Messung des Wechselstromanteiles und des Gleichstromanteiles den gleichen Kern zu verwenden. Durch Addition der beiden Werte $i_{FW}$ und $i_{FRe}$ erhält man für den Fehlerstrom einen relativ genauen Wert, selbst dann, wenn die den Wert $i_{FW}$ messende Schaltung $S_{FW}$ ungenau arbeitet. Dies ergibt sich aus folgender Ueberlegung. Ist der für $i_{FW}$ gemessene Wert zu hoch, so ist auch der daraus gebildete Kompensationsstrom $i_{KoFW}$ zu hoch. Infolgedessen wird auch der von der andern Messchaltung gemessene Strom $i_{FRe}$ geringer. Bei der Addition werden nun zwei Werte zusammengezählt, wovon der eine um den Wert des Messfehlers zu hoch, der andere um den gleichen Wert zu niedrig ist. In der Summe ist daher der Messfehler nicht mehr    enthalten.

Etwas allgemeiner, wenn auch weniger anschaulich, lässt sich die Lösung der Aufgabe wie folgt beschreiben: Derjenige Teil $i_{FW}$ des Fehlerstromes $i_F$, für den der Ausdruck $\frac{di_{FW}}{dt}$ so hohe Werte annimmt, dass die vom Wechselstromanteil des Fehlerstromes bewirkte Magnetisierungsänderungsgeschwindigkeit $\frac{d\phi_{iFW}}{dt}$ so gross wird, dass die zur Gleichstromsensibilisierung vorgeschlagene Schaltung $S_{FGL}$ nicht mehr genau arbeitet, wird in seiner Wirkung auf den Kern $K_{iFRe}$, der zur Feststellung des Gleichstromanteiles des Fehlerstromes dient, kompensiert. Hierzu wird ein Kompensationsstrom $i_{KoFW}$ über eine Spule des Kernes $K_{iFRe}$ geleitet und dort eine entsprechende Gegendurchflutung bewirkt. Die Schaltung benutzt als Abschaltkriterium eine Grösse $G_{Ab}$, wobei

$$G_{Ab} = f\ (i_{KoFW} + ki_{KoFRe})$$

wo also $G_{Ab}$ eine Funktion der Summe der beiden Anteile des Fehlerstromes ist, nämlich des Wechselstromanteiles $i_{FW}$, der durch den Kompensationsstrom $i_{KoFW}$ repräsentiert ist, und des restlichen Fehlerstromanteiles $i_{FRe}$ , der zweckmässigeraber nicht notwendigerweise ebenfalls durch einen Kompensationsstrom $i_{KoFRe}$ gemessen und repräsentiert wird. Die Bildung dieser Summe erfolgt unter Berücksichtigung des Vorzeichens , das heisst, der Richtung dieser Stromanteile. Das Zeichen f als Ausdruck eines Funktionsverhältnisses kann auch besagen, dass die Absolutwerte der Stromanteile addiert werden, die Stromrichtung also unberücksichtigt bleibt. Wenn nun die Schaltung so ausgelegt ist, dass der Wechselstromanteil und der Gleichstromanteil des Fehlerstromes durch eine Spannung im gleichen Masstab repräsentiert werden, so bedeutet das Einsetzen der Zahl 1 für den Faktor k, dass der Wechselstromanteil und der Gleichstromanteil des Fehlerstromes für die Bewertung einer bestehenden Gefahr gleichberechtigt sind. Die Schaltung erlaubt es, dem Umstand Rechnung zu tragen, dass bei Gleichstrom der Höchstwert der Stromstärke, den ein Mensch ohne Schaden vertragen kann, schätzungsweise doppelt so hoch liegt wie bei Wechselstrom. Um dies zu berücksichtigen , kann man für den Faktor k den Wert 2 einsetzen.

Der Wert $G_{Ab} = f(\ i_{KoFW} + ki_{KoFRe})$ kann direkt als Abschaltkriterium verwendet werden, indem die Schaltung so gebaut ist, dass der Schutzschalter abschaltet, wenn der Wert $G_{Ab}$ grösser ist als ein vorgegebener Wert, beispielsweise 3o mA. Diese Bedingung gilt für Absolutwerte von $G_{Ab}$. Um dies zu berücksichtigen, kann man die Spannung $u_{Ab}$, welche $G_{Ab}$ repräsentiert, zuerst gleichrichten, das heisst die negativen Werte zu positiven Werten umformen. Danach werden die so erhaltenen Werte, welche jetzt alle positiv sind, durch einen
einzigen Komparator mit einer positiven Referenzspannung
verglichen. Man kann aber auch ohne Gleichrichterschaltung
auskommen, wenn man zwei Kompensatoren verwendet. Der erste
schaltet ab, wenn die Spannung $u_{Ab}$ positiv ist und höher liegt
als eine gegebene positive Referenzspannung. Der zweite
schaltet ab, wenn die Spannung $u_{Ab}$ stärker negativ ist als
eine gegebene negative Referenzspannung. Wenn man dem
Signal am Ausgang eines Komparators, das eine Abschaltung
bewirkt, die Logisch-EINS zuordnet, so müssen die Ausgänge
durch eine ODER-Schaltung verknüpft werden. Man kann auch
den Schutzschalter gemäss einer Offenlegungsschrift in der
BRD Nr. 26 42 430 so bauen, dass er abschaltet, wenn die
Aenderung des Fehlerstromes in einer vorgegebenen Zeit einen
zu hohen Wert erreicht.

Die Anwendung des Kompensationsprinzips in der Messchaltung
erbringt den Vorteil , dass die Temperaturabhängigkeit der
darin  verwendeten Bauteile keine Messfehler verursacht. Dies
gilt zum Beispiel für Aenderungen der Permeabilität des im
Summenstromwandlerkern benutzten Materials. Die Schaltung
arbeitet über einen sehr grossen Messbereich genau linear.
Von Vorteil ist ferner, dass der Gleichstromanteil anders bewertet werden kann als der Wechselstromanteil. Für viele der
in den letzten Jahren vorgeschlagenen gleichstromempfindlichen Fehlerstromschutzschalter ist es erforderlich, dass der
Ausdruck $\frac{d\Theta_v}{dt}$ gegenüber $\frac{d\Theta_{iF}}{dt}$ gross ist, damit der vom
$\frac{d\Theta_{iF}}{dt}$ verursachte Fehler im Rahmen der gestellten Ansprüche
bezüglich Messgenauigkeit bleibt. Verwendet man nun gemäss
der vorliegenden Erfindung eine Schaltung, mittels der die
Wechseldurchflutung $\Theta_{iF}$ des Fehlerstromes sozusagen aus dem
Kern $K_{iFRe}$ extrahiert wird - man kann es auch wie vorher
"kompensiert" nennen - so ist hier der restbleibende Teil
$\frac{d\Theta_{FRe}}{dt}$ der vom Fehlerstrom hervorgerufen Durchflutungsänderungsgeschwindigkeit $\frac{d(\Theta_{iF} - \Theta_{iFW})}{dt}$ fast null. Man kann
daher den Ausdruck $\frac{d\Theta_v}{dt}$ relativ klein wählen. Dies bedeutet,
dass bei vielen der vorgeschlagenen gleichstromempfindlichen Fehlerstromschutzschalter für die praktische Entwicklung wesentlich mehr Freiheit in der Wahl der Daten und in der Dimensionierung gegeben ist. Man kann die Frequenz oder die Amplitude des Stromes, der den zur Kontrolle der Gleichstromvormagnetisierung erzeugten magnetischen Wechselfluss hervorruft, herabsetzen oder ganz auf die Verwendung eines Generators für erhöhte Frequenz verzichten und die Netzfrequenz von 50 Hertz benutzen. Eine Schaltung, die bisher nur mit Ferritkern arbeiten konnte, kann jetzt auch mit einem Bandkern aus ferromagnetischem Material hergestellt werden

Figur 1 zeigt ein Ausführungsbeispiel, das im Wesentlichen mit einem Ausführungsbeispiel übereinstimmt, das in der ersten Anmeldung in Luxemburg vom 22. Mai 1978, Aktenzeichen 79681 enthalten ist.

Figur 2 zeigt eine Variante, die nach der bisher üblichen Norm abschaltet, das heisst, wenn der Fehlerstrom einen fest vorgegebenen Wert überschreitet. Zusätzlich ist eine Schaltung vorhanden, welche eine Abschaltung bewirkt wenn sich der Fehlerstrom in einer fest vorgegebenen Zeit beispielsweise in 2 Sekunden, um einen Wert erhöht, der ein fest vorgegebenes Mass überschreitet.

Figur 3 zeigt im Einzelnen den Aufbau einer Speicherschaltung, die in Figur 2 einfach als Viereck gezeichnet ist.

Die Figuren 4a, 4b, 4c, 4d, 4e, 4f zeigen Zeitdiagramme, welche sich auf eine Zeitgeberschaltung beziehen, die zur Steuerung der vorgenannten Speicherschaltung verwendet wird.

Figur 5 zeigt einen Kern in dem seitlich ein Loch angebracht ist, sodass man mit einem einzigen Kern auskommen kann.

Figur 6 zeigt einen aus ferromagnetischem Band oder Draht gewickelten Kern, der an eine Stromquelle angeschlossen ist und von einem elektrischem Strom durchflossen wird.

Figur 7 zeigt allgemein, wie die erfindungsgemässsen Verbesserungen auf einen Fehlerstromschutzschalter angewendet werden können,der eine Schaltung besitzt, die an ihrem Ausgang eine Spannung liefert, welche eine geeignete Funktion eines Gleichstromfehlerstromes ist.

Figur 8 zeigt die Anwendung auf einen Fehlerstromschutzschalter spezieller Bauart.

Figur 9 und 10 zeigen besondere Ausführunsformen eines der beiden Schenkel des Auslösers.
Fig. 11 zeigt eine Variante zur Wechselstromkompensation. Die Schaltung der Figur 1 hat die Besonderheit, dass sie getrennt den Fehlerwechselstrom und den Fehlergleichstrom feststellt und diese addiert.Sie erfasst einwandfrei sowohl den Wechselstrom wie den Gleichstromanteil eines Fehlerstromes. Sie funktioniert auch einwandfrei, wenn ein Gleichstromfehlerstrom in einer vorgegebenen Richtung fliesst. Hat derselbe die entgegengesetzte Richtung, so funktioniert sie nicht.

Eine Verbesserung erreicht man, wenn man für jede Richtung einen besonderen Komparator mit den Operationsverstärker 30 resp. 40 verwendet. Man kann aber auch in die zum P-Eingang des Operationsverstärkers 40 führende Leitung eine Präzisionsvollweggleichrichterschaltung einfügen, wie in Figur 1 durch ein punktiert eingezeichnetes Viereck 37 dargestellt. Sie muss so eingebaut sein, dass eine Spannung am Eingang, die ein positives Vorzeichen aufweist, auch am Ausgang mit positivem Vorzeichen auftritt, während eine Spannung, die am Eingang ein negatives Vorzeichen besitzt, am Ausgang mit geändertem, also positivem vorzeichen auftritt.

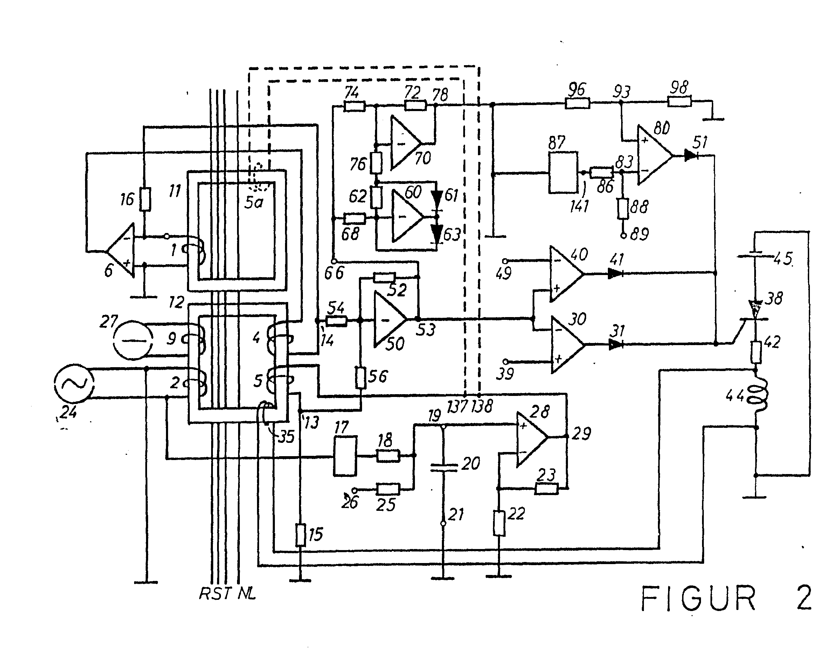

Es folgt eine zusammengefasste Beschreibung der Funktionsweise einer erfindungsgemässen Ausführung anhand der Figur 2.
Mit Hilfe des Kernes 11 und des Operationsverstärkers 6 wird
der Wechselstromanteil des Fehlerstromes festgestellt. Dabei
wird gleichzeitig im Kern 11 und 12 die Wirkung des Wechselstromanteiles des Fehlerstromes kompensiert. Mit Hilfe des
Kernes 12 und der Stromquelle 24 wird der induktive Widerstand der Spule 2 überwacht, mit Hilfe des Operationsverstärkers 28 wird er auf einen konstanten Wert geregelt und
dabei der Gleichstromanteil des Fehlerstromes festgestellt.

Am Ausgang des Operationsverstärkers 50 erhält man eine
Spannung, welche die Summe der beiden Stromanteile repräsentiert. Sie ist dem wirklichen Fehlerstrom nachgebildet, falls
nicht durch Wahl verschiedener Widerstandswerte von 54 und 56
eine ungleiche Bewertung der Stromanteile vorgenommen wurde.
Der Operationsverstärker 40 arbeitet als Komparator und stellt
fest, ob in der einen Richtung der Fehlerstrom einen als absoluten Höchstwert eingestellten Wert überschreitet. Der andere Operationsverstärker 30 erfüllt die gleiche Funktion für
Fehlerstrom in der andern Richtung.
Mit Hilfe des Tyristors 38 wird ein Strom über die Spule 44
des Auslösers eingeschaltet, wenn der Fehlerstrom den absoluten Höchstwert in der einen oder andern Richtung überschreitet.
Der Auslöser bewirkt dann das Abschalten des Schutzschalters.
Der obere Teil der Schaltung mit den Operationsverstärkern
60, 70, 80 und der Speicherschaltung 87 dient dazu festzustellen, ob der Fehlerstrom sich in einer Zeit von 2 Sekunden
um mehr als 5 mA geändert hat. Ist dies der Fall, so bewirkt
sie ein Zünden des Tyristors, so dass ein Strom über die Spule 44 des Auslösers fliesst und dieser eine Abschaltung des
Schutzschalters hervorruft.
Es folgt eine detaillierte Beschreibung der Figur 2. Die in
ähnlicher Weise aufgebaute Schaltung der Figur 1 funktionniert
in fast gleicher Weise. Bei ihr fehlt die Eigenschaft, dass sie
bei bestimmten Aenderungen des Fehlerstromes in einer gegebenen zeit abschaltet. Zur Vermeidung von Unklarheiten, besonders

bei Uebersetzungen, wird das Wort Resistor zur Bezeichnung eines materiellen Widerstandskörpers benutzt. Das Wort Widerstand soll nur die physikalische Grösse bezeichnen, welche durch den Ausdruck $\frac{U}{I}$, das heisst den Quotient von Spannung durch Stromstärke definiert ist. In figur 2 sind durch die Wandlerkerne 11 und 12 die betriebsstromführenden Leiter R, S, T und der Mittelleiter eines dreiphasigen Netzes geführt. Auf dem Kern 11 ist die Spule 1, auf dem Kern 12 sind die Spulen 9, 2, 4 und 5 angeordnet. Die Enden der Spule 1 sind mit den beiden Eingängen des Operationsverstärkers 6 verbunden. Der P-Eingang des letzteren ist mit Masse verbunden. Der Ausgang des Operationsverstärkers 6 ist über die Spule 4, den Punkt 14 und den Resistor 16 mit dem N-Eingang des Operationsverstärkers 6 verbunden. Der Punkt 14 zwischen der Spule 4 und dem Resistor 16 ist über den Resistor 54 mit dem N-Eingang des Operationsverstärkers 5o verbunden. Die Spule 9 auf dem Kern 12 ist an eine Quelle 27 für konstanten Gleichstrom angeschlossen, welcher in diesem Kern einen magnetischen Fluss im Uhrzeigerumlaufsinn bewirkt. Die Enden der auf dem Kern 12 befindlichen Spule 2 sind an eine Wechselstromquelle 24 angeschlossen, welche einen eingeprägten Strom liefert. Ausserdem ist das eine Ende der Spule 2 mit Masse, das andere mit dem Eingang einer Präzisionsgleichrichterschaltung 17 verbunden. Diese ist nur als Viereck in der Zeichnung 17 dargestellt. Sie ist genauso aufgebaut wie die zwischen den Punkten 66 und 78 dargestellte Vollwegpräzisionsgleichrichterschaltung mit den Operationsverstärkern 6o und 7o der Figur 2. Sie kann aber auch eine Halbweggleichrichterschaltung sein, das heisst, eine Schaltung welche an Ihrem Ausgang eine Spannung liefert, die während der einen halben Periode null ist, während der andern halben Periode die Form einer halben Sinuswelle aufweist . Der Ausgang der Gleichrichterschaltung 17 ist über den Resistor 18, über den Punkt 19 und über den Kondensator 2o mit Masse verbunden. Der Punkt 19 ist über den Resistor 25 mit dem Anschlusspunkt 26 verbunden. Ausserdem ist er mit dem P-Eingang des Operationsverstärkers 28 verbunden. Der Ausgang 29 des Operationsverstärkers ist

über den Resistor 23 mit seinem eigenen N-Eingang verbunden. Dieser N-Eingang ist ausserdem über den Resistor 22 mit Masse verbunden. Der Ausgang 29 ist über die Spule 5, über den Punkt 13 und den Resistor 15 mit Masse verbunden. Der Punkt 13 ist über den Resistor 56 mit dem N-Eingang des Operationsverstärkers 5o verbunden. Der P-Eingang des Operationsverstärkers 5o ist nicht eingezeichnet. Er ist mit Masse verbunden. Der Ausgang 53 des Operationsverstärkers 5o ist über den Resistor 52 mit dem N-Eingang von 5o, ferner mit dem N-Eingang des Operationsverstärkers 3o und dem P-Eingang des Operationsverstärkers 4o sowie mit dem Eingang 66 einer Präzisionsgleichrichterschaltung verbunden, welche aus den beiden Operationsverstärkern 6o und 7o, aus den Resistoren 62, 68, 72, 74, 76 und den Dioden 61 und 63 aufgebaut ist. Der Widerstand des Resistors 68 ist gleich dem der Resistoren 62 und 76, der Widerstand des Resistors 76 ist die Hälfte des Widerstandes der Resistoren 72 und 74. Der Ausgang 78 der Präzisionsgleichrichterschaltung ist mit dem Eingang des Speichers 87 verbunden. Dessen Ausgang ist über den Resistor 86 mit dem N-Eingang 83 des Operationsverstärkers 8o verbunden. Der N-Eingang 83 ist über den Resistor 88 mit dem Anschlusspunkt 89 verbunden. Der Ausgang des Operationsverstärkers 8o ist mit der Kathode der Diode 51 verbunden. Der Ausgang des Operationsverstärkers 4o ist mit der Kathode der Diode 41, der Ausgang des Operationsverstärkers 3o mit der Kathode der Diode 31 verbunden. Die Anoden der drei Dioden 31, 41 und 51 sind am Steuereingang des Thyristors 38 angeschlossen. Eine Gleichstromquelle 45, ein Thyristor 38, ein Resistor 42 und eine Spule 44 liegen in einem Stromkreis in Serie. Die Spule 44 ist eine Spule, die auf einem Schenkel des Auslösers des Fehlerstromschutzschalters angeordnet ist.

Man nehme nun an, es fliesse keinerlei Strom über die drei Phasenleiter und den Mittelleiter. Dann ist an den Enden der Spule 1 ebenso wie an den Eingängen des Operationsverstärkers 6 die Spannung null, und es fliesst weder über diese Spule 1 noch über den Ausgang dieses Operationsverstärkers 6 ein Strom. Dann ist auch die Spule 4 stromlos. Die Quelle 24 ruft über die Spule 2 einen eingeprägten Wechselstrom hervor. Aus der an dieser Spule 2 auftretenden Spannung $u_2$ bildet die Präzisionsgleichrichterschaltung 17 zusammen mit dem Tiefpass, der aus dem Resistor 18 und dem Kondensator 2o besteht, eine im Punkt 19 wirksame positive Gleichspannung $u_{19}$ von geringer Welligkeit, sofern der Anschlusspunkt 26 nicht angeschlossen ist. Am Punkt 26 kann man jetzt eine Gleichspannung anschliessen, welche die entgegengesetzte Polarität hat, wie die Spannung $u_{19}$, welche vor dem Anschliessen des Punktes 26 im Punkt 19 bestanden hat. Die Gleichspannung im Punkt 26 wird nun so eingestellt, dass die Spannung $u_{19}$ im Punkt 19 den Wert null annimmt. Diese Einstellung muss aber, wie oben angegeben, erfolgen, wenn keinerlei Fehlerstrom fliesst. Wenn infolge eines auftretenden Wechselstrom-Fehlerstromes im Kern 11 ein magnetischer Wechselfluss $\phi_{iFW}$ erzeugt wird, so entsteht in der Spule 1 eine entsprechende induzierte Wechselspannung. Der Operationsverstärker 6 stellt dann über seinen Ausgang einen Strom so ein, dass die Spannungsdifferenz an seinen Eingängen zu null wird. Die Spule 1 wirkt daher wie eine kurzgeschlossene Spule auf einem Transformator, mit dem Unterschied nur, dass der Kurzschlusstrom nicht direkt von dem einen Ende der Spule zum andern gelangt, sondern dass er von dem einen Spulende über den Resistor 16, über den Punkt 14, über die Spule 4, über den Ausgang des Operationsverstärkers 6 und über Masse zu dem am P-Eingang angeschlossenen anderen Spulende gelangt. Er kompensiert in beiden Kernen 11 und 12, die vom Wechselstromanteil des Fehlerstromes hervorgerufene Durchflutung. Da der Operationsverstärker 6 seinen N-Eingang auf Nullpotential gegenüber Masse einstellt, so ist die Spannung im Punkt 14 ein Mass für den in der Spule 1 fliessenden Strom und damit auch für den Wechselstromanteil des Fehlerstromes, vorausgesetzt, dass der Widerstand des Resistors 54 gegenüber dem Widerstand des Resistors 16 sehr gross ist. Man nehme an, es fliesse keinerlei Fehlerstrom und es trete in dem folgenden Augenblick ein Gleichstrom-Fehlerstrom auf. Da der Augenblickswert des Fehlerstromes vom Wert null bis zu einem gegebenen Endwert ansteigt, ändert sich der magnetische Fluss im Summenstromwandlerkern 11. Da die in der Spule 1 erzeugte Sekundärspannung auf die Eingänge des Operationsverstärkers 6 wirkt, erzeugt dieser über die Spule 1 einen Strom, der der Aenderung des magnetischen Flusses im Kern 11 entgegenwirkt. Das Entstehen des dem Fehlerstrom entsprechenden Flusses wird verzögert, aber nicht verhindert. Wenn der Gleichstrom-Fehlerstrom seinen Endwert erreicht hat, also nicht mehr ansteigt, so hört das Ansteigen des magnetischen Flusses im Kern 11 kurze Zeit später ebenfalls auf. Dadurch wird die von der Spule 1 an den Eingängen des Operationsverstärkers 6 erzeugte Spannung nahezu null. Dadurch sinkt auch die am Ausgang des Operationsverstärkers 28 wirksame Spannung und der Strom , welcher vorher dem Gleichstrom-Fehlerstrom beim Aufbau des magnetischen Flusses im Kern 11 entgegenwirkte, wird kleiner und hört schliesslich ganz auf. Der magnetische Fluss im Kern 11 erreicht dann einen gewissen Wert, der lediglich durch die Stärke des fliessenden Gleichstrom-Fehlerstromes bestimmt ist. Dagegen wird im Kern 12 das Entstehen eines dem Gleichstrom-Fehlerstrom entsprechenden Flusses ganz verhindert, und zwar anfänglich durch den vom Operationsverstärker 6 erzeugten Strom, der auch über die auf dem Kern 12 angeordnete Spule 4 geleitet wird, später durch einen über die Spule 5 fliessenden Strom. Dieser wird vom Operationsverstärker 28 so eingestellt, dass die Spannungsdifferenz an den Eingängen des Operationsverstärkers 28 fast null ist. Das ist dann der Fall, wenn der Strom über die Spule 5 eine solche Richtung hat und so stark ist , dass er zusammen mit dem anfänglich über die Spule 4 fliessenden Strom die vom Gleichstromanteil des Fehlerstromes bewirkte Durchflutung fast restlos kompensiert. Der induktive Widerstand der Spule 2 ist dann fast der gleiche wie bei der Einstellung der Gleichspannung wie sie auf Seite 13 beschrieben ist. Somit ist auch die an den Enden der Spule 2 auftretende Wechselspannung nahezu die gleiche. Die Spannung im Punkt 19 ergibt sich aus der an den Enden der Spule 2 wirksamen Spannung und aus der Spannung, die am Punkt 26 fest eingestellt wurde. Sie ist daher fast die gleiche wie bei der Einstellung, nämlich nahezu null. Die geringe an den Eingängen des Operationsverstärkers 28 vorliegende Spannungsdifferenz reicht aber aus, um über den Ausgang 29 des Operationsverstärkers 28 den erforderlichen Kompensationsstrom hervorzurufen. Dieser Strom fliesst auch über den Resistor 15 und es entsteht im Punkt 13 eine Spannung, welche diesem Strom und somit auch dem Gleichstromanteil des Fehlerstromes proportional ist, vorausgesetzt, dass der Widerstand des Resistors 56 sehr gross ist im Vergleich zum Widerstand des Resistors 15. Wenn die Resistoren 15 und 16 gleich sind, und wenn die Resistoren 54 und 56 gleich sind, so wirkt der Operationsverstärker 50 mit seinen Resistoren 52, 54 und 56 wie eine Addierschaltung, und die Spannung am Ausgang des Operationsverstärkers 50 ist proportional der Summe des Wechselstromanteils und des Gleichstromanteils des Fehlerstromes. Ist der Widerstand des Resistors 56 das Doppelte des Widerstandes des Resistors 54, so ist der Wechselstromanteil doppelt so stark bewertet wie der Gleichstromanteil.

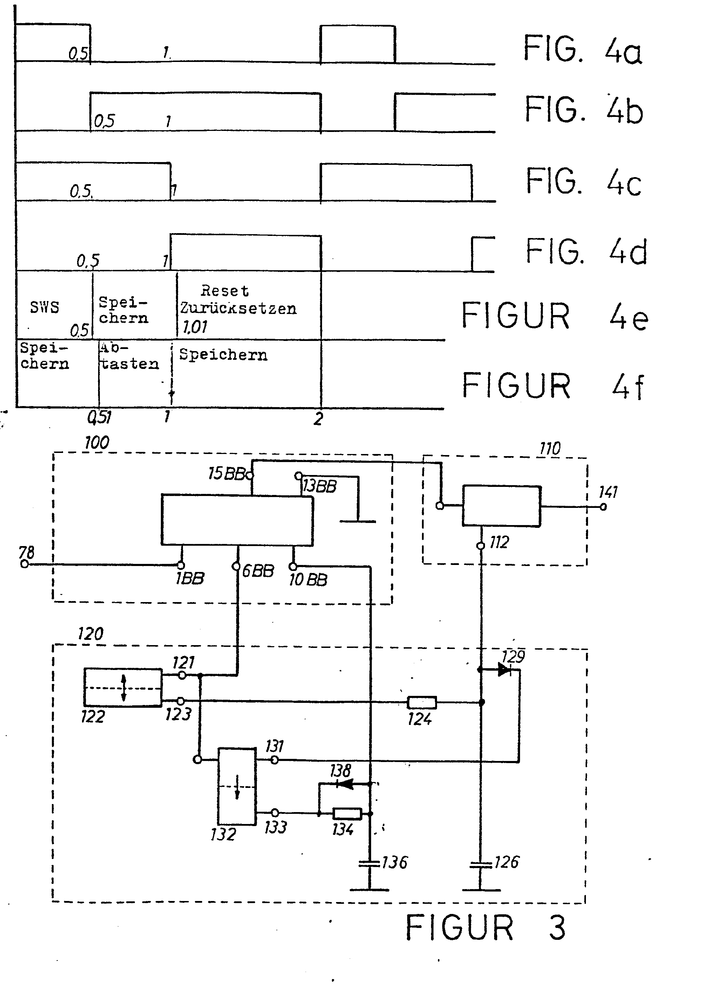

Die am Ausgang des Operationsverstärkers 50 resultierende Spannung gelangt zum Eingang der zwischen den Punkten 66 und 78 liegenden Präzisionsgleichrichterschaltung. Der Ausgang 78 dieser Gleichrichterschaltung ist wie aus Figur 3 ersichtlich mit dem Eingang der Schaltung 87 verbunden. Letztere kann eine Schaltung sein, welche alle zwei Sekunden den kurz vorher aufgetretenen Spitzenwert $u_{SP}$ des Fehlerstromes feststellt und für die Dauer von 2 Sekunden speichert. Eine einfache Spitzenwertfeststellungs- und speicherschaltung ist jedoch nicht gut geeignet, weil diese an ihrem Ausgang nicht nur festgestellte Spitzenwerte anzeigt, sondern auch den Rückstellwert, auch Reset genannt, sowie die Werte, die vor Erreichen des endgültigen Spitzenwertes durchlaufen werden. Solche Werte sind aber als Referenzwerte für die nachgeschaltete Komparatorschaltung nicht brauchbar. Daher besteht in Figur 3 die Schaltung 87 aus 3 Teilschaltungen. Die erste Teilschaltung ist eine Spitzenwertfeststellungs und speicherschaltung 100. Die zweite Teilschaltung ist eine Zeitgeberschaltung 12o, die dritte eine einfache Speicherschaltung 11o.

Die erste Teilschaltung übernimmt vom Ausgang 78 der Gleichrichterschaltung der Figur 2 die aus halben Sinuswellen bestehende gleichgerichtete Spannung $u_{78}$ auf ihren Eingang 1 BB und zwar in der Zeit o bis o,5 Sekunden. Dieser Zeitabschnitt ist in Figur 4e mit SWS bezeichnet. Gleichzeitig bildet sie intern aus $u_{78}$ den Spitzenwert und zeigt diesen an ihrem Ausgang 15 BB an. In der Zeit o,5 bis 1,o1 Sekunde speichert sie den vorher festgestellten Spitzenwert und zeigt nur noch diesen an ihrem Ausgang 15 BB an. In der Zeit von 1,o1 Sekunde bis 2 Sekunde wird sie auf die an ihrem Eingang 13 BB bestehende Spannung zurückgestellt. DieSchaltung 11o soll den von der Schaltung 1oo festgestellten Spitzenwert übernehmen und 2 Sekunden lang speichern. Die Zeitgeberschaltung 12o sorgt dafür, dass die Uebernahme des Spitzenwertes zur richtigen Zeit erfolgt, nämlich wenn sich die Schaltung 1oo mit Sicherheit im Zustand "speichern" befindet. Die Schaltung 11o befindet sich dann im Zustand Abtasten, gemäss Figur 4 f von o,51 bis 1 Sekunde. Zu diesem Zweck ist ihr Steuereingang 112 mit einem Ausgang der Zeitgeberschaltung 12o verbunden. Die Zeitgeberschaltung hat 2 weitere Ausgänge, welche mit den Steuereingängen 6BB und 1o BB der Schaltung 1oo verbunden sind. Sie sorgt dafür, dass die Zustände der beiden Schaltungen 1oo und 11o koordonniert und in zyklischer Wiederholung auftreten. In der folgenden Beschreibung dieser Schaltung wird dem niedrigen Spannungswert eines nichtinvertierten logischen Anschlusspunktes die LOGISCH-NULL, dem hohen die LOGISCH-EINS zugeordnet.

Die Zeitgeberschaltung 12o besteht aus einem astabilen Multivibrator 122 und einem monostabilen Multivibrator 132. Die Spannung am nichtinvertierten Ausgang 121 des astabilen Multivibrators 122 hat wie in Figur 4a dargestellt vom Zeitpunkt o Sekunde bis o,5 Sekunde ihren hohen Wert , den der LOGISCH-EINS. Sie wirkt auf den Eingang des monostabilen Multivibrators 132, so dass an dessem invertiertem Ausgang 133 wie in Figur 4d dargestellt, in der Zeit von 0 Sekunde an die Spannung ihren niedrigen Wert, den der LOGISCH-NULL hat. Wenn der monostabile Multivibrator 132 an seinem Eingang einen positiven Impuls erhält, so tritt an seinen Ausgang während der Dauer von einer Sekunde der hohe Spannungswert der LOGISCH-EINS auf. Danach kehrt er wieder in seinen stabilen Zustand zurück, das heisst sein Ausgang nimmt den Wert der LOGISCH-NULL an und verharrt solange in diesem bis ein neuer positiver Impuls an seinen Eingang auftritt. Die LOGISCH-EINS am Ausgang 121 der Schaltung 122 wirkt auf den Eingang 6BB der Schaltung 1oo, während die LOGISCH-NULL des Ausgangs 133 über die Diode 138 auf den Eingang 1o BB der Schaltung 1oo einwirkt. Diese logische Kombination versetzt die Schaltung 1oo für die Zeit von o bis o,5 Sekunde in den Arbeitszustand "Spitzenwertfeststellung". Die Spannung am Ausgang 15 BB folgt dann der Spannung am Eingang 1 BB, solange diese zunimmt. Sie folgt ihr nicht , wenn diese abnimmt, sondern behält dann den Maximalwert bei, der seit dem Zeitpunkt o Sekunde an ihrem Eingang 1 BB aufgetreten ist. Da der Ausgang 78 der Gleichrichterschaltung gemäss Figur 3 mit dem Eingang 1 BB der Schaltung 1oo verbunden ist, so stellt der festgestellte Maximalwert den Höchstwert der Spannung dar, die am Ausgang 78 der Gleichrichterschaltung von Figur 2 aufgetreten ist. Zum Zeitpunkt o,5 Sekunde ändert die Spannung am Ausgang 121 des Multivibrators 122 auf den niedrigen Wert wie aus Figur 4 a ersichtlich und setzt den Eingang 6 BB auf LOGISCH-NULL. Am Ausgang 133 bleibt die LOGISCH-NULL bestehen wie aus Figur 4 d ersichtlich, ebenso wie am Eingang 1o BB. Wenn beide Steuereingänge auf LOGISCH-NULL stehen, befindet sich die Schaltung 1oo im Zustand " Speichern". Dieser Zustand dauert wie aus Figur 4f ersichtlich vom Zeitpunkt o,5 bis zum Zeitpunkt 1,o1 Sekunde. Obwohl, wie aus Figur 4 d ersichtlich der Ausgang 133 schon im Zeitpunkt 1 Sekunde auf die LOGISCH-EINS ändert, wird der Zustand "Speichern" erst o,o1 Sekunde später beendigt, weil der aus dem Resistor 134 und dem Kondensator 136 gebildete Tiefpass eine solche Verzögerung bringt. Am invertierten Ausgang 123 tritt zum Zeitpunkt o,5 Sekunde wie aus Figur 4b ersichtlich die LOGISCH-EINS auf. Diese bewirkt, dass zum Zeitpunkt o,51 Sekunde die Schaltung 11o in den Zustand "Abtasten" übergeht. Die Verzögerung von o,1 Sekunde wird durch den Tiefpass hervorgerufen, der aus dem Resistor 124 und dem Kondensator 126 besteht. Der Zustand "Abtasten" der Schaltung 11o wird zum Zeitpunkt 1 Sekunde beendigt,wenn wie aus Figur 4f ersichtlich der nichtinvertierte Ausgang 131 sich auf LOGISCH-NULL ändert, weil die niedrige Spannung über die Diode 129 sofort auf den Eingang der Schaltung 11o gelangt. Also befindet sich die Schaltung 11o von o,51 Sekunde bis 1 Sekunde im Zustand "Abtasten" wie aus Figur 4f ersichtlich. In der übrigen Zeit einer Periode, die 2 Sekunden dauert, ist die Schaltung 11o im Zustand "Speichern". Wenn im Zeitpunkt 1 Sekunde die Schaltung 132 in ihren stabilen Zustand zurückkehrt, ändert sich wie aus Figur 4d ersichtlich am Ausgang 133 die LOGISCH-NULL zu einer LOGISCH-EINS, während die LOGISCH-NULL am Eingang 6 BB bestehen bleibt. Diese Kombination bewirkt, dass die Schaltung 1oo in den Zustand "Reset" versetzt wird, das heisst an ihrem Ausgang 15 BB tritt die am "Reset-Voltage-Eingang" liegende Spannung auf, allerdings mit einer Verzögerung von o,o1 Sekunde durch den aus 134 und 136 bestehenden Tiefpass. Der "Resetzustand" dauert wie aus Figur 4e ersichtlich vom Zeitpunkt 1,o5 bis 2 Sekunde. Zum Zeitpunkt 2 Sekunden beginnt der Zyklus von neuem. Durch die Verzögerungsglieder wird erreicht, dass die Schaltung 11o nur in der Zeit einen Wert aus der Schaltung 1oo übernimmt, wenn letztere sich im Zustand "Speichern" befindet. Zusammenfassend stellt man fest, dass die Schaltung 11o an ihrem Ausgang 141 eine Spannung aufweist, welche der höchste Spitzenwert ist, den die Schaltung 1oo in einer voraufgegangenen Zeitspanne von o,5 Sekunden Dauer festgestellt hat. Die Schaltung 87 stellt alle 2 Sekunden diesen Wert neu fest und speichert ihn während 2 Sekunden.

Man nehme nun an, es liege ein aus Wechselstrom bestehender Fehlerstrom vor, der seit mehr als 2 Sekunden einen konstanten Effektivwert hat. Dann tritt im Punkt 78 eine Wechsel-

0005694

spannung $u_{78}$ auf, die aus loo positiven Halbwellen pro Sekunde besteht. Wenn diese Spannung ihr Maximum durchläuft, ist ihr Augenblickswert gleich dem Spannungswert $u_{141}$, der am Ausgang 141 der Speicherschaltung 87 auftritt. Zu allen andern Zeitpunkten ist die Spannung $u_{78}$ am Punkt 78 kleiner als die Spannung $u_{141}$ am Punkt141.

Die Resistoren 96, 98, 86 und 88 sollen gleichen Widerstand haben. Die beiden Resistoren 96 und 98 bilden einen Spannungsteiler, und an dem zwischen ihnen liegenden Punkt 93 ist die Hälfte der Spannung $u_{78}$ wirksam, weil der andere Anschlusspunkt von 98 an Masse angeschlossen ist. Ebenso liegt am Punkt 83 der zwischen 86 und 88 liegt, die Hälfte der Spannung $u_{141}$, falls der Anschlusspunkt 89 an Masse, das heisst an einer Spannung von null Volt liegt.

Wenn wie vorhin angenommen ein reiner Wechselstromfehlerstrom fliesst, der seit mehr als 2 Sekunden einen konstanten Effektivwert hat, so ist die am P-Eingang des Operationsverstärkers 80 wirksame Spannung $\frac{u_{78}}{2}$ gleich der am N-Eingang 83 wirksamen Spannung $\frac{u_{141}}{2}$. Bei der geringsten Steigerung des Fehlerstromes erhöht sich dann der Scheitelwert von $u_{78}$ über die Spannung $u_{141}$.

Die Spannung am Ausgang des Operationsverstärkers 80 steigt dann bis zur positiven Aussteuerungsgrenze, der Thyristor 38 zündet und es erfolgt eine Abschaltung des Fehlerstromschutzschalters. Es istaber zweckmässig, dass der Schalter eine begrenzte Steigerung des Fehlerstromes innerhalb einer gegebenen Zeit, beispielsweise 5 mA in 2 Sekunden auf jeden Fall noch zulässt, das heisst deswegen noch keine Abschaltung hervorruft. Zu diesem Zweck kann man im Anschlusspunkt 89 statt der angenommenen Spannung von null Volt eine positive Spannung $u_{89}$ anschliessen und diese so einstellen, dass eine plötzliche Erhöhung des Fehlerstromes um 5 mA gerade ausreicht, um am Ausgang des Operationsverstärkers 80 eine positive Spannung hervorzurufen, welche den Thyristor 38 zündet. Für diese Einstellung ist vorausgesetzt, dass die Erhöhung des Fehlerstromes zu einer Zeit eintritt, wo keine Einspeicherung eines neuen Wertes in den Speicher

110 erfolgt. Die Spannung am N-Eingang 83 hat jetzt den arithmetischen Mittelwert der Spannung $u_{141}$ und $u_{89}$, ist also

$$u_{83} = \frac{u_{141} + u_{89}}{2} .$$

Beim Gebrauch des Fehlerstromschtuzschalters kann Folgendes vorkommen. Der Fehlerstrom steigt in etwa 0,01 Sekunde um 4,9 mA an. Nach 0,4 Sekunde erfolgt von der Zeitgeberschaltung das Signal zum Einspeichern eines neuen Wertes und anschliessend tritt der entsprechende neue Wert am Eingang 83 des Operationsverstärkers 80 auf. Danach steigt der Fehlerstrom in 0,01 Sekunde erneut um 4,9 mA. Eine Abschaltung erfolgt aber nicht. Es ist also in einer Zeit von 0,42 Sekunden eine Steigerung des Fehlerstromes um 9,8 mA eingetreten. Allgemein ergibt sich, dass eine Abschaltung auf jeden Fall und zwar sofort erfolgt, wenn eine Zunahme des Fehlerstromes in 2 Sekunden grösser ist als 10 mA, und dass eine Abschaltung auf keinen Fall erfolgt, wenn die Zunahme des Fehlerstromes in 2 Sekunden geringer ist als 5 mA. Ein Fehlerstrom, der im Laufe von einigen Stunden langsam und stetig ansteigt, könnte also Werte von 0,5 A erreichen, so dass er einen Brand verursachen kann, ohne dass der Schutzschalter abschaltet.

Daher soll durch die aus den Operationsverstärkern 30 und 40 gebildete Schaltung ein fester Grenzwert für den Fehlerstrom gegeben sein, beispielsweise ein absolutes Maximum von 30mA. Zum Einstellen dieses Grenzwertes kann man einen nur aus Wechselstrom bestehenden Fehlerstrom, beispielsweise von 30 mA hervorrufen und am N-Eingang 49 des Operationsverstärkers 40 eine positive Gleichspannung so einstellen, dass eine Abschaltung dann gerade noch erfolgt. Am P-Eingang 39 des Operationsverstärkers 30 wird eine Gleichspannung von gleichem Absolutwert aber von entgegengesetzter Polarität angeschlossen. Die 3 Dioden 31, 41, 81 bewirken eine ODER-Verknüpfung der Abschaltungsfunktionen der 3 Operationsverstärker. Wenn einer derselben an seinem Ausgang in die positive Aussteuerungsgrenze geht, so zündet der Tyristor 38. Von der Quelle 45 fliesst ein Strom über den Tyristor 38, den Man kann den Reset-Eingang auch mit dem Ausgang 78 verbinden und so die Spannung des Ausgangs 15 BB auf den Augenblickswert der Spannung des Ausgangs 78 zurücksetzen.

Auf dem Kern 12 ist eine Spule 9 angeordnet, die an eine
Quelle für konstanten Gleichstrom angeschlossen ist. Dadurch
entsteht in diesem Kern eine Gleichstromvormagnetisierung.
Wenn nun ein Gleichstrom-Fehlerstrom auftritt, der diese
Vormagnetisierung verstärkt, so vermindert sich die Permeabilität des Kernes. Die dann eintretende Verringerung der
Selbstinduktionsspannung an der Spule 2 ist ein eindeutiges Zeichen für die Regelschaltung, die den Fehlergleichstrom über die Spule 5 kompensiert, dass der Fehlergleichstrom eine bestimmte Richtung hat. Wenn der Fehlergleichstrom in der andern Richtung fliesst, bewirkt er eine Erhöhung der Selbstinduktionsspannung an der Spule 2. Damit
ist die Richtungsempfindlichkeit der Gleichstromkompensationsschaltung gegeben.

Eine Variante der beschriebenen Ausführung erhält man, wenn
man den über die Spule 5 fliessenden Strom über eine zusätzliche auf dem Kern 11 angeordnete Spule leitet und zwar
in der Richtung, dass die von einem Gleichstrom-Fehlerstrom
bewirkte Durchflutung auch im Kern 11 kompensiert wird. Zu
diesem Zweck wird in Figur 2 der von Punkt 29 zur Spule 5
führende Leiter          zwischen den Punkten 137 und 138
aufgetrennt und wie gestrichelt dargestellt mit der auf dem
Kern 11 angeordneten Spule 5 a verbunden.
Zur Feststellung eines Gleichstromfehlerstromanteiles benutzen die angegebenen Ausführungen den Kern 12, indem der induktive Widerstand einer auf diesem Kern befindlichen Spule
2 , mit Hilfe eines von einer Stromquelle 24 gelieferten
Wechselstromes $i_v$ geprüft wird. Es ist nicht möglich, ohne
sonstige besondere Massnahme, diese Prüfspule auf den Kern
11 zu verlegen und so den zweiten Kern 12 zu sparen, weil die
von dem geprüften Strom $i_v$ erzeugte Wechseldurchflutung durch
die auf den Kern 11 wirkende Wechsel-Magnetfluss-Kompensa-

Resistor 42 und die Spule 44. Die Spule 44 ist auf dem Schenkel des Haltemagnetes des Auslösers angeordnet. Die Quelle 45 kann ein handelsübliches sogenanntes Netzgerät sein, das an seinem Ausgang eine konstante Gleichspannung liefert.

Die Aufgabe bei Nichtfunktionieren des elektronischen Teiles des Fehlerstromschutzschalters, eine Abschaltung hervorzurufen, wird dadurch gelöst, dass die Enden der Spule 44 zusätzlich mit den Enden einer Spule 35 verbunden sind, welche wie in Figur 2 dargestellt, auf dem Kern 12 angeordnet ist.

Die Spule 35 kann man auch auf dem Kern 11 anordnen. Man kann auch auf jeden der beiden Kerne eine Spule anordnen, diese in Serie oder parallel schalten und mit den Enden der Spule 44 verbinden. Die Spitzenfeststellungs- und Speicherschaltung 1oo der Figur 3 kann eine von der Firma Burr-Brown International Airport Industrial Airpark P.O.Box 11400 - Tucson, Arizona 85734, U S A, lieferbare Schaltung "Hybrid Microcircuit Peak Detector 4085 " sein. Die in Figur 3 für die Anschlusspunkte der Schaltung 1oo benutzten Bezugszeichen bestehen aus einer Zahl und den beiden Buchstaben BB. Letztere sollen darauf hinweisen, dass die Zahlen mit denjenigen übereinstimmen, welche von der genannten Firma zur Markierung der Anschlusspunkte in den Datenblättern benutzt werden. Es ist klar, dass man sie in dem beschriebenen Ausführungsbeispiel durch eine andere Schaltung ersetzen kann, sofern diese die folgenden Eigenschaften hat. Sie hat einen analogen Eingang 1 BB ; einen analogen Ausgang 15 BB; einen logischen Steuereingang 6 BB; einen logischen Steuereingang 1o BB und einen "Reset Voltage" Eingang und funktioniert nach der folgenden Tabelle

| folgenden Tabelle | Steuereingang 6 BB | Steuereingang 10 BB |
|---|---|---|
| Spitzenspannungs-feststellung | 1 | 0 |
| Abtasten | 0 | 0 |
| Reset, das heisst Zurücksetzen der Spannung auf null | 0 | 1 |

- 23 -

0005694

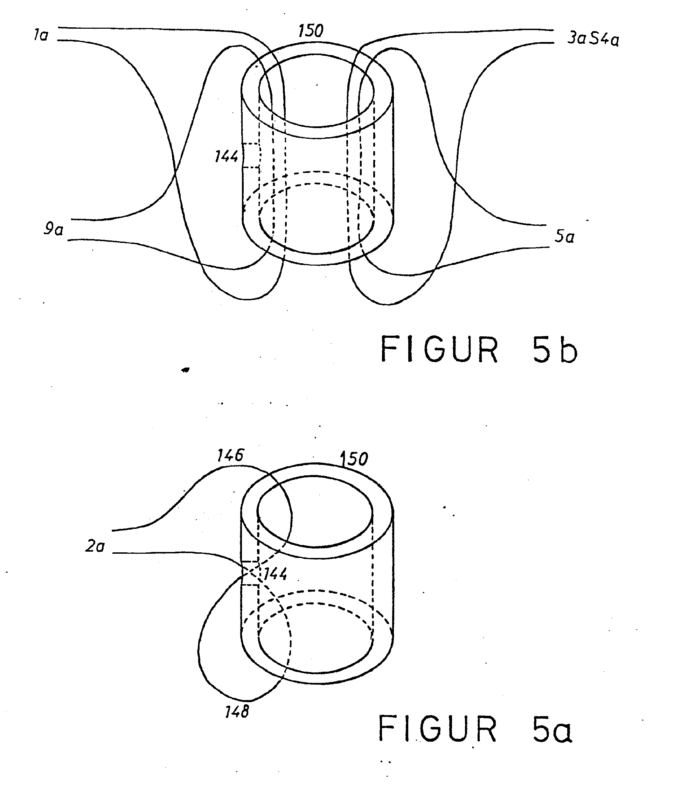

tionsschaltung aufgehoben würde. Diese Schwierigkeit verschwindet, wenn man die Spule, welche den prüfenden Strom $i_v$ führt, in folgender Weise anordnet:Der Kern des Wandlers soll die Form eines zylindrischen Hohlkörpers haben, der durch Aufwickeln eines dünnen Blechbandes entstanden ist, das aus einer magnetisch gut leitenden Legierung besteht. In der Mitte des Zylinders soll in radialer Richtung von aussen ein Loch 144 gebohrt sein. Die Spule, deren Induktivität durch Durchleiten eines Stromes $i_v$ geprüft werden soll, ist in Figur 5a mit dem Bezugszeichen 2a gekennzeichnet. Sie ist so ausgeführt, dass, wie in Figur 5a dargestellt, der Draht von aussen durch das Loch, dann in Richtung der Zylinderachse nach der einen Seite aus dem Zylinder herausgeführt wird, ein weiteres Mal - ist nicht mehr in Figur 5a dargestellt - in das Loch eingeführt und wieder zu der gleichen Seite aus dem Zylinder herausgeführt wird, bis man die gewünschte Windungszahl hat. Alsdann wird der Draht ebensooft durch das Loch und in Richtung der Zylinderachse nach der andern Seite aus dem Zylinder herausgeführt. Die so erhaltenen zwei Spulenteile 146 und 148 bewirken im Kerninnern einen magnetischen Fluss, der nicht mit den andern auf dem Kern angeordneten Spulen, welche in der Figur 5b dargestellt sind, verkettet ist. Die Wechseldurchflutungen, die von $i_v$ über die aus den zwei Teilspulen 146 und 148 bestehende Spule 2a hervorgerufen werden, werden jetzt nicht durch die Wechsel-Magnetfluss-Kompensationsschaltung aufgehoben. Zwecks besserer Uebersicht ist in Figur 5a nur die Anordnung der Spule 2a und in Figur 5b die Anordnung der übrigen Spulen auf dem gleichen Kern dargestellt. Die Schaltung sieht dann folgendermassen aus :In Figur 1 fallen die beiden Kerne mit den 6 Spulen 1,9,2,3,4 und 5 fort und werden durch den Kern 150 der Figur 5a respektiv 5b mit den zugehörigen Spulen ersetzt. Die Spule 1a wird an die Anschlusspunkte angeschlossen, an die vorher die Spule 1 in Figur 1 angeschlossen war, ebenso 9a an die vorherigen Punkte von 9, die Spule 2a an die vorherigen Punkte von 2, die Spule 3aS4a wird dort angeschlossen, wo vorher die Serienschaltung der Spulen 3 und 4 angeschlossen war, die Spule 5a wird dort angeschlossen, wo vorher die Spule 5 angeschlossen war.

Man stelle sich nun vor, der Kern 150 in der Figur 5a respektiv 5b sei in der Höhe des Loches 144 in zwei gleich grosse Ringe gespalten, im übrigen sei die Anordnung und der Anschluss der Spulen noch die gleiche. Alsdann hat man eine andere ebenfalls mögliche Ausführung vor sich.

In der Auslegeschrift Nr. 2550060 der BRD wird ein besonderes Verfahren zur Detektion eines Magnetfeldes vorgeschlagen, das für einen Fehlerstromschutzschalter sehr geeignet erscheint.Das Verfahren ermöglicht es, ein Zeitintervallverhältnis zu bestimmen,das ein Mass für eine Vormagnetisierung durch Fehlerstrom oder Remanenz ist.In dieser Patentanmeldungsschrift ist angegeben, dass die Vormagnetisierung bezugsweise ein zu detektierender Strom durchaus veränderlich sein können, sofern nur die Aenderung innerhalb eines Zyklusintervalls genügend gering gegenüber dem Aenderungshub des Detektionsstromes ist. Durch die auf Kern 11 der Figur 1 angebrachten Wechselmagnetisierungskompensationsschaltung, welche auch im Kern 12 die Wechselmagnetisierung aufhebt , wird diese Bedingung in fast idealer Weise erfüllt. Die genannte Schaltung zur Detektion eines Magnetfeldes würde man also auf den Kern 12 von Figur 1 anordnen.

Auch in einer Offenlegungsschrift in der BRD Aktenzeichen p 2555221 ist ein Verfahren zur Erfassung von Fehlerströmen beschrieben, die ein Ausgangssignal liefert, das dem Fehlerstrom proportional ist.

Durch Anwendung der erfindungsgemässen Verbesserungen ergibt sich eine Schaltung gemäss Figur 7.
Der mit gestrichelter Linie umrahmte Teil 170 stellt hier allgemein eine beliebige Schaltung dar, welche aus einem Summenstromwandler mit einem Kern 12, einer auf diesem befindlichen Spule 102 und einer Zusatzschaltung 180 besteht, welche an ihrem Ausgang 183 eine Spannung $u_{183}$ abgibt, die der vom Gleichstromanteil des Fehlerstromes hervorgerufenen Durchflutung proportional ist, welche im Kern 12 noch wirksam ist, nachdem dort die vom Wechselstromanteil des Fehlerstromes bewirkte Durchflutung durch einen Strom kompensiert ist, der über eine auf diesem Kern befindliche Spule 4 geleitet wird. Die hierfür benutzte erfindungsgemässe Zusatzschaltung ist punktiert eingezeichnet. Wie aus den Zahlen der Bezugszeichen ersichtlich, hat sie den gleichen Aufbau wie der entsprechende Teil der Figur 2. Der den Wechselstromanteil des Fehlerstromes kompensierende Strom fliesst über den Resistor 16 und im Punkt 14 tritt eine diesem Wechselstromanteil proportionale Spannung auf. Diese Spannung liegt am Resistor 54, während am Resistor 56 die Spannung $u_{183}$ liegt, die dem auf dem Kern 12 noch wirksamen Anteil des Fehlerstromes, nämlich dem Gleichstromanteil proportional ist. Wenn die Resistoren 15 und 16 gleich sind, wenn die Resistoren 54 und 56 gleich sind und wenn die beiden letzten viel grösser sind als die zwei ersten, so repräsentiert die Spannung am Ausgang vom Operationsverstärker 50 die Summe des Wechselstromanteiles und des Gleichstromanteiles des Fehlerstromes. Diese Spannung wird durch die Vollweggleichrichterschaltung 37 gleichgerichtet. Am Punkt 49 wird eine Gleichspannung angeschlossen und so eingestellt, dass der Operationsverstärker 40 über die Diode 41 den Tyristor 38 zündet und der Schutzschalter abschaltet, wenn ein fliessender Fehlerstrom gerade den vorgegebenen Höchstwert erreicht.

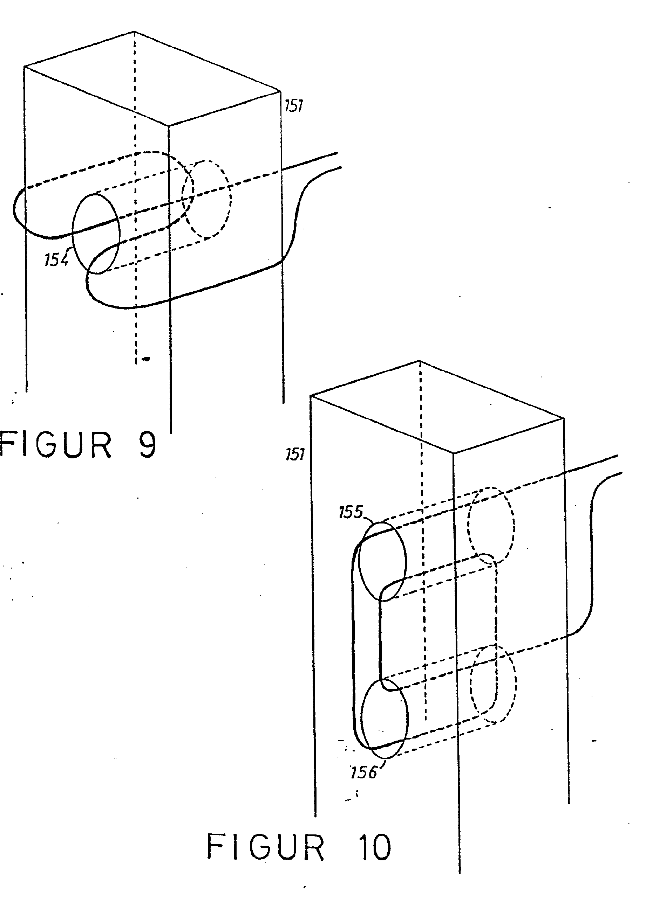

In einer internationalen Patentanmeldung Nummer PCT/EP 78/ 00013 ist ein Fehlerstromschutzschalter beschrieben, in welchem der von einem Fehlerstrom bewirkte magnetische Fluss direkt auf das magnetische System des Auslösers geleitet wird. Es dürfte schwierig und teuer sein die dort vorgeschlagene Form des Kernes aus dünnem lamelliertem Blech herzustellen. Bei massiver Ausführung wird die Wechselstromempfindlichkeit durch auftretende Wirbelströme stark reduziert. Eine solche Ausführung ist in Figur 8 mit durchgezogenen Linien dargestellt.

Zur Behebung dieses Nachteiles kann man die vom Wechselstromanteil des Fehlerstromes hervorgerufene Durchflutung

durch eine erfindungsgemässe Schaltung kompensieren. Dies geschieht ähnlich wie in Figur 1. Die erforderliche Zusatzschaltung ist in Figur 8 durch punktierte Linien dargestellt. Die Spule 1 ist durch den Kern 65 durchgeführt, und die in ihr erzeugte Wechselspannung bewirkt einen über sie fliessenden Kompensationsstrom, der vom angeschlossenen Operationsverstärker 6 eingestellt wird. Ein gleichstarker Strom $i_{16}$ fliesst auch über den Resistor 16 und die Spule 47, die auf dem Schenkel 151 des Auslösers angeordnet ist. Wenn ein aus Wechselstrom und Gleichstrom bestehender Fehlerstrom fliesst, so bildet sich im Kern 65 nur der dem Gleichstromanteil entsprechende magnetische Fluss. Je nach Stärke dieses Stromanteiles kann derselbe für sich allein schon eine Abschaltung hervorrufen, die nach dem in der Patentanmeldung Nr. PCT/ EP 78 / 00013 beschriebenen Prinzip erfolgt. Der Wechselstromanteil bewirkt einen Strom über die Spule 47 und damit eine zusätzliche Schwächung des magnetischen Flusses, der den Anker 58 des Auslösers festhält , wenn der Strom über die Spule 47 gerade die hierfür günstige Richtung angenommen hat. Das Verhältnis der Wechselstromempfindlichkeit im Vergleich zur Gleichstromempfindlichkeit lässt sich durch Variieren des Verhältnisses der Windungszahlen der Spulen 1 und 47 einstellen.

Die Spule 47 kann auch aus 2 Spulenhälften bestehen, die durch ein im Schenkel 151 angebrachtes Loch 154 durchgeführt sind. Figur 9 zeigt den Schenkel 151 mit einem Loch, durch das der Leiter zwei Mal durchgeführt wird. Dabei umschlingt der den Strom $i_{16}$ führende Leiter einmal die eine, dann die andere Hälfte des Querschnittes des Schenkels 151, der durch das Loch in 2 Hälften geteilt ist. Der Strom durchläuft dabei die Form einer Ziffer 8. Der Schenkel 151 kann auch zwei Löcher 155 und 156 aufweisen, die übereinander angeordnet sind, wenn man sich die Längsachse des Schenkels senkrecht stehend vorstellt, wie in Figur 10 dargestellt. Der Spulenleiter ist hier nicht mehr aussen um den Schenkel herumgeführt, wie in Figur 9, sondern nur noch durch die beiden Löcher.

0005694

Sowohl die Anordnung nach Figur 9, wie die Anordnung nach Figur 10 ergeben einen magnetischen Fluss, der sich fast nur in der Umgebung des Loches 154 respektiv der beiden Löcher 155 und 156 bildet. Wenn der über den Resistor 16 fliessende Strom stark genug ist, wird das Material, das das Loch 154, respektiv die Löcher, umgibt in die magnetische Sättigung getrieben, und der magnetische Fluss, der vom Permanantmagnet 64 über den Anker 58 getrieben wird, nimmt ab, sodass der Anker abfällt. Die Richtung des Stromes, der über die Spule 47 fliesst, spielt dabei keine Rolle.

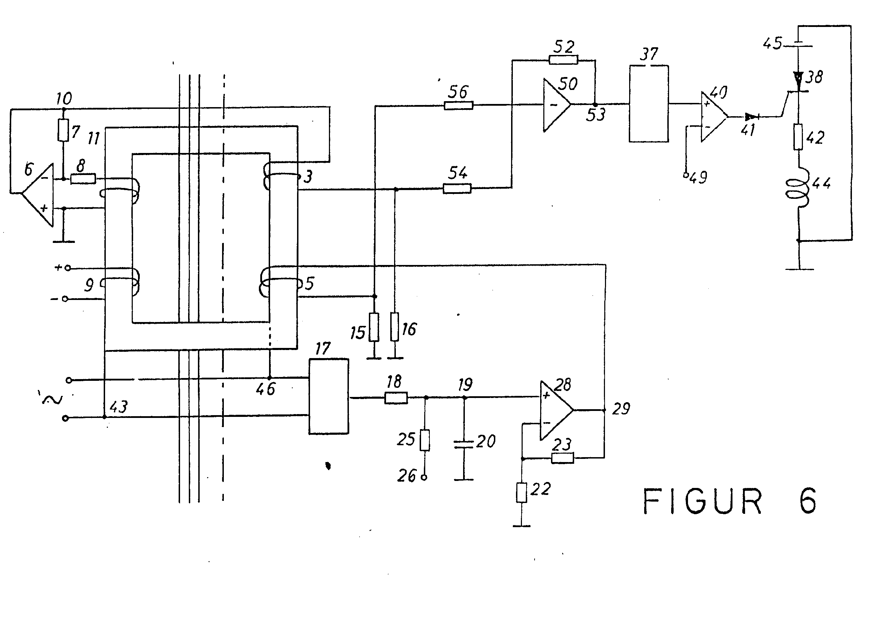

Ausser der auf der Seite 23 angegebenen Möglichkeit, die Feststellung der beiden Fehlerstromanteile $i_{FW}$ und $i_{FRe}$ auf einem einzigen Wandlerkern vorzunehmen und so den zweiten Wandlerkern 12 zu sparen, gibt es hierzu noch eine andere Möglichkeit. Figur 6 zeigt die entsprechende Schaltung. Genau wie in Figur 1 ist auf dem Kern 11 eine Spule 1 angeordnet, und der Operationsverstärker 6 bewirkt über die Spule 3 einen Strom, der die vom Wechselstrom-Fehlerstrom $i_{FW}$ bewirkte Durchflutung fast ganz kompensiert, sodass nur ein geringer magnetischer Wechselfluss übrigbleibt.

Ausserdem befindet sich auf diesem Kern 11 eine Spule 9, die an einer Quelle mit konstantem Gleichstrom angeschlossen ist, und es entsteht im Kern ein magnetischer Fluss im Uhrzeigerumlaufsinn. Die Stromquelle mit eingeprägtem Wechselstrom $i_v$, welche in der Schaltung nach Figur 1 an die Spule 2 angeschlossen wurde, wird hier an die beiden Enden 43 und 46 des Bandes angeschlossen, aus dem der Wandlerkern 11 hergestellt ist. Der Strom $i_v$ ruft im Innern des Bandes quer zur Bandlängsrichtung einen magnetischen Fluss hervor, der innerhalb des Bandquerschnittes an dessen Umfang entlang läuft. Dieser Fluss bewirkt für den Strom $i_v$ einen bestimmten induktiven Widerstand. An den Enden 43 und 46 des Kernbandes tritt eine entsprechende Selbstinduktionsspannung auf. Die Gleichrichterschaltung 17 und der Tiefpass, der aus dem Resistor 18 und dem Kondesator 20 besteht, bildet aus dieser Wechselspannung eine Gleichspannung mit geringer Welligkeit, die auf den

0005694

P-Eingang des Operationsverstärkers 28 gelangt. Wenn keinerlei Fehlerstrom auftritt, hat diese einen bestimmten Wert. Fliesst ein Gleichstrom-Fehlerstrom in solcher Richtung, dass er den vom Gleichstrom $i_{GL}$ bewirkten Fluss im Uhrzeigerumlauf verstärkt, so sinkt die Permeabilität des Kernmaterials und damit auch die Spannung am P-Eingang von 28. Hat der Fehlerstrom-Gleichstrom die umgekehrte Richtung, so steigt diese Spannung.

Der Operationsverstärker 28 stellt jetzt über die Spule 5 einen Strom von solcher Richtung und Stärke ein, dass die Spannungsdifferenz zwischen seinem N-Eingang und seinem P-Eingang null wird. Dieser Strom kompensiert die von einem Gleichstromanteil des Fehlerstromes im Kern 11 erzeugte Durchflutung, falls man vorher am Punkt 26 eine Gleichspannung von geeignetem Wert angeschlossen hat. Diese Spannung wird so eingestellt, dass der vom Operationsverstärker 28 hervorgerufene Strom den Wert null annimmt, wenn keinerlei Fehlerstrom fliesst.

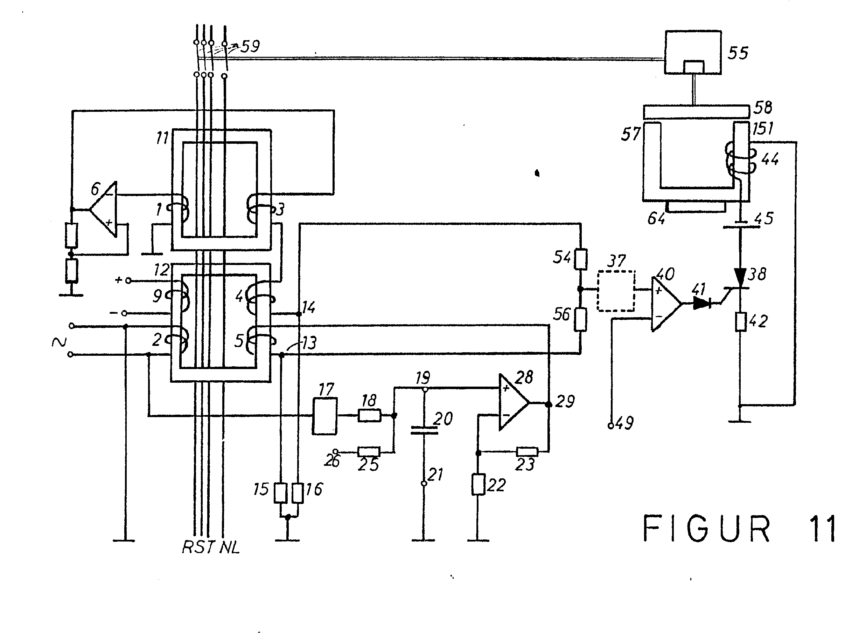

In Figur 11 ist eine Variante zur Wechselstromkompensation dargestellt. Der Operationsverstärker 6 wird hier in der Nichtinvertiererschaltung verwendet. Das eine Ende der Spule 1 auf dem Kern 11 ist hier mit dem P-Eingang des Operationsverstärkers, das andere mit Masse verbunden. Der Ausgang des Operationsverstärkers ist wie in Figur 1 über die Spule 3, die Spule 4, den Punkt 14 und den Resistor 16 mit Masse verbunden. Ausserdem ist der Ausgang über 2 in Serie liegende Resistoren mit Masse verbunden. Sein N-Eingang ist mit einem zwischen diesen Resistoren liegenden Punkt verbunden.

In Figur 1 ist ausserdem dargestellt, wie die auch in den Figuren 2, 6, 7 eingezeichnete Spule 44 auf dem Schenkel eines Auslösemagnetes angeordnet ist. Wenn der Tyristor 38 zündet, bewirkt der über die Spule 44 fliessende Strom eine Verminderung des magnetischen Flusses der vom Permanentmagnet 64 über die Schenkel 57, 151 und über den Anker 58 hervorgerufen wird. Wenn sich der Anker unter der Einwirkung einer nicht eingezeichneten Feder abhebt, so überträgt sich diese Bewegung auf die beweglichen Teile des Schaltschlosses 55. Diese bewirkt, dass sich die Schaltkontakte 59 öffnen und die Verbraucheranlage abgeschaltet wird.

0005694

Bezüglich der Figur 11 wird noch darauf hingewiesen, dass der Kern auch aus Draht gewickelt werden kann, der aus ferromagnetischem Material von hoher Permeabilität besteht, und dass die Enden dieses Drahtes dann mit der Stromquelle verbunden werden, welche durch diesen Draht einen Wechselstrom $i_V$ hervorruft.

-Patentansprüche

1. Fehlerstromschutzschalter mit einem Kern (Bezugszeichen 11 in den Figure 1, 2, 6, 7, Bezugszeichen 65 in Figur 8) aus magnetisch leitendem Material, der ein Loch aufweist, durch das die betriebsstromführenden Leiter in üblicher Weise ein oder mehrere Male durchgeführt sind, mit einer Einrichtung, welche die Feststellung eines aus Gleichstrom bestehenden Fehlerstromes gestattet, gekennzeichnet durch eine auf dem Kern angeordnete Spule (Bezugszeichen 1 in den Figuren 2, 7 und 8, Bezugszahl 3 in den Figurem 1 und 6) und durch eine an diese Spule angeschlossene, aus Halbleiterbauteilen aufgebaute Schaltung, welche einen über diese Spule fliessenden Strom so einstellt, dass die vom Wechselstromanteil des Fehlerstromes bewirkte Durchflutung aufgehoben wird.

2. Fehlerstromschutzschalter gemäss Anspruch 1, gekennzeichnet durch einen zweiten Kern (12 in den Figuren 1, 2 und 7) eine darauf angeordnete Spule (4 in den Figuren 1,2 und 7) und eine an diese Spule angeschlossene Schaltung, welche aus Halbleiterbauteilen aufgebaut ist und welche einen über diese Spule fliessenden Strom so einstellt, dass die vom Gleichstromanteil des Fehlerstromes bewirkte Durchflutung in diesem Kern aufgehoben wird.

3. Fehlerstromschutzschalter mit einem Kern (11 in der Figur 6) aus magnetisch leitendem Material, der ein Loch aufweist, durch das die betriebsstromführenden Leiter ein oder mehrere Male durchgeführt sind, dadurch gekennzeichnet, dass dieser Kern aus Band oder Draht gewickelt ist, wobei die Enden dieses Bandes oder Drahtes mit einer Wechselstromquelle verbunden sind und dass die Selbstinduktionsspannung, die sich an den Enden dieses Bandes oder Drahtes einstellt, respektiv die Stärke des Stromes, welcher über das Band oder den Draht fliesst, von einer Regelschaltung auf einen Sollwert geregelt wird, indem diese einen Strom von geeigneter Stärke über eine auf diesem Kern angeordnete Spule 5 in Figur 6 einstellt.

FIGUR 1

FIGUR 2

0005694

FIG. 4a

0.5   1

FIG. 4b

0,5   1

FIG. 4c

0,5   1

FIG. 4d

0,5   1

| SWS | Spei-chern | Reset Zurücksetzen 1,01 | FIGUR 4e |
|-----|-----------|----------|
| Spei-chern | Ab-tasten | Speichern | FIGUR 4f |

0,5    0,51    1    2

100    110

15BB    13BB    141

78    1BB    6BB    10BB    112

120

121    129

122    123    124

131

138

132    133    134

136    126

FIGUR 3

0005694

FIGUR 5b

FIGUR 5a

0005694

FIGUR 6

0005694

FIGUR 7

FIGUR 8

FIGUR 9

FIGUR 10

0005694

FIGUR 11